# EUROPÄISCHE PATENTSCHRIFT

(11) **EP 0 800 008 B1**
(45) Veröffentlichungstag und Bekanntmachung des Hinweises auf die Patenterteilung: **12.06.2002**
(21) Anmeldenummer: 97890059.5
(22) Anmeldetag: 27.03.1997
(51) Int. Cl.: F16C 3/08

(54) **Kurbelwelle für Hubkolbenmaschinen**
Crankshaft for piston machine
Vilebrequin pour machine à pistons

(30) Priorität: 02.04.1996 AT 18696 U
(43) Veröffentlichungstag der Anmeldung: 08.10.1997
(73) Patentinhaber: AVL List GmbH, 8020 Graz (AT)
(72) Erfinder: Hübl, Hanns-Peter, Dipl.-Ing. Dr., 8055 Graz (AT); Hasewend, Wolfram, Dipl.-Ing., 8020 Graz (AT)
(74) Vertreter: Babeluk, Michael, Dipl.-Ing. Mag.

(56) Entgegenhaltungen:
- CH-A- 221 373
- FR-A- 799 099
- FR-A- 2 174 133

## Beschreibung

Die Erfindung betrifft eine Kurbelwelle für Hubkolbenmaschinen, mit zumindest einer einen Kurbelzapfen mit einer Kurbelzapfenlagerfläche und zumindest eine Kurbelwange aufweisenden Kröpfung, und mindestens einem Wellenzapfen mit einer Wellenzapfenlagerfläche, wobei zwischen an Kurbelwangen grenzenden Zapfenlagerflächen und der jeweiligen Kurbelwange eine umlaufende, nutförmige Freistellung mit definierter Breite und Tiefe sowie zumindest einem definierten Ausrundungsradius ausgebildet ist.

Die infolge der Gaskräfte und der rotierenden und oszillierenden Massen auftretenden Kräfte verursachen durch Biegemomente lokale Spannungsspitzen, insbesondere im Bereich des Überganges einer Kurbelwange in den Kurbelzapfen oder Wellenzapfen. Es ist, z.B. aus der FR 2 174 133 A oder der CH 221 373 A, bekannt, in diesem Bereich eine umlaufende Freistellung mit einem über den Zapfenumfang konstanten Ausrundungsradius bzw. einer konstanten Breite vorzusehen, um die Bearbeitung der Lagerflächen zu ermöglichen. Die Mindesttiefe der Freistellung ergibt sich aus den Bearbeitungserfordernissen der Lagerflächen. Im Hinblick auf die entstehende Querschnittsverminderung wird die Freistellungstiefe möglichst klein gehalten. Sie beträgt beispielsweise bei Kurbelwellen kleiner und mittlerer Maschinen etwa 0,3 bis 0,5 mm. Trotz dem Ausrundungsradius kommt es in diesem Bereich zum Auftreten lokaler Spannungsspitzen, welche bei der Dimensionierung der Kurbelwelle berücksichtigt werden müssen. Die Ausrundungsradien und Lagerbreiten unterliegen dabei dem Zielkonflikt, daß größere Radien und Breiten der Freistellung zwar spannungserniedrigend wirken, andererseits aber die Lagerbreite verringern.

Aus der FR 799 099 A ist weiters eine Kurbelwelle einer Brennkraftmaschine bekannt, deren Wellenlagerzapfen im Bereich der Kurbelwangen durchgehende Querbohrungen aufweisen, wobei zwischen den Bohrungen und den Zapfenlagerflächen Schlitze eingeformt sind. Durch diese Schlitzen und Bohrungen sollen Biegespannungen verringert werden. Allerdings wird durch die Bohrung auch der Zapfenquerschnitt zur Übertragung von Drehmomenten wesentlich vermindert, wodurch es zu einer kritischen Schwächung der Kurbelwelle kommen kann.

Aufgabe der Erfindung ist es, höher belastbare bzw. leichtere und kleinere Kurbelwellen zu schaffen.

Erfindungsgemäß wird dies bei der eingangs genannten Kurbelwelle dadurch erreicht, daß die Freistellungsbreite, vorzugsweise auch der Ausrundungsradius zumindest einer Zapfenlagerfläche im Bereich der niedrigsten Lagerbelastung am Zapfen größer ausgebildet ist als im Bereich der höchsten Lagerbelastung. Die Erfindung macht sich dabei die Tatsache zunutze, daß der Ort der höchsten Biegespannung im Bereich der Freistellung und der Ort der höchsten Lagerbelastung am Zapfen einander diametral gegenüberliegen. Dadurch kann ohne Einbuße der Lagertragfähigkeit an einer Halbseite die Breite der Kurbelwellenzapfenlagerfläche verringert und die Breite der Freistellung, gegebenenfalls auch der Ausrundungsradius vergrößert werden. Auf diese Weise können lokale Spannungsspitzen abgebaut werden, eine kleinere Dimensionierung der Kurbelwelle ist somit möglich.

Vorzugsweise ist vorgesehen, daß die Freistellungsbreite und gegebenenfalls der Ausrundungsradius vom Bereich der höchsten Lagerbelastung zum Bereich der niedrigsten Lagerbelastung kontinuierlich zunimmt. Die Freistellung kann dabei durch spanabhebende Bearbeitung, wie Fräsen, oder in einem Umformungsvorgang, beispielsweise Kaltwalzen, hergestellt werden.

Eine besonders einfache Herstellung, etwa durch Fräsen, ist möglich, wenn die Freistellung an der die höchste Lagerbelastung aufweisenden Zapfenhalbseite überwiegend eine konstante minimale Breite und gegebenenfalls einen konstanten, minimalen Ausrundungsradius und an der die minimale Lagerbelastung aufweisenden gegenüberliegenden Zapfenhalbseite überwiegend eine konstante maximale Breite und gegebenenfalls einen konstanten maximalen Ausrundungsradius aufweist, wobei der Übergang von der minimalen zur maximalen Breite bzw. vom minimalen zum maximalen Ausrundungsradius in in einem biegespannungsarmen Bereich der Kurbelwelle liegt.

Um Spannungsspitzen im Übergang von der minimalen zur maximalen Breite und gegebenenfalls vom minimalen zum maximalen Ausrundungsradius zu vermeiden, ist es vorteilhaft, wenn im Übergangsbereich die Breite und gegebenenfalls der Ausrundungsradius kontinuierlich zunimmt.

Ein besonders guter Abbau lokaler Spannungsspitzen läßt sich erzielen, wenn die maximale Breite mindestens etwa 1,5 bis 3, vorzugsweise 2, mal der minimalen Breite und gegebenenfalls der maximale Ausrundungsradius mindestens etwa 1,5 bis 3, vorzugsweise 2, mal dem minimalen Ausrundungsradius beträgt.

Die Aufgabe kann aber erfindungsgemäß bei der eingangs genannten Welle auch dadurch gelöst werden, daß die Zapfenlagerfläche im Bereich der niedrigsten Lagerbelastung am Zapfen eine sichelförmige Entlastungskerbe unmittelbar neben der Freistellung aufweist. Durch die Kerbe wird ein veränderlicher Ausrundungsradius angenähert simuliert. Die Entlastungskerbe ist besonders einfach und auch nachträglich bei herkömmlichen Kurbelwellen herzustellen. Günstige Ergebnisse lassen sich erzielen, wenn die Entlastungskerbe etwa eine Tiefe zwischen 0,6 und 1,2, vorzugsweise von 0,8, mal der Freistellungstiefe beträgt, wobei die Entlastungskerbe sich etwa über einen Zapfenwinkel von 45° bis 180°, vorzugsweise 60° bis 120° beidseits des Bereiches der niedrigsten Lagerbelastung am Zapfen erstreckt. Dadurch, daß die Entlastungskerbe sich nicht über den gesamten Umfang, sondern nur über einen Bereich mit hohen Biegespannungen erstreckt, wird die Lagerfläche im am stärksten beanspruchten Lagerbereich nicht vermindert.

Besonders gute Spannungsreduzierungen lassen sich dadurch erreichen, daß der Abstand zwischen Freistellung und Entlastungskerbe zwischen etwa 0,5 und 2, vorzugsweise etwa 0,8 bis 1,2 mal der Freistellungstiefe beträgt. Weiters ist es günstig, wenn der maximale Ausrundungsradius der Entlastungskerbe zwischen etwa 1 und 3, vorzugsweise etwa 1,5 bis 2,5, der Freistellungstiefe beträgt.

Bei Kurbelwangen mit einem Anlaufbund für das Haupt- und/oder Pleuellager kann eine weitere Spannungserniedrigung erzielt werden, wenn zwischen Kurbelwange und zumindest einer Freistellung des Zapfens in an sich bekannter Weise ein Anlaufbund vorgesehen ist, dessen Durchmesser größer ist als der Zapfendurchmesser, wobei der Anlaufbund einen zur Kurbelwange auslaufenden Ausrundungsradius aufweist, der vorzugsweise etwa 0,5 bis 1,5, besonders vorzugsweise 1,0 mal dem Ausrundungsradius der Freistellung beträgt.

Vorzugsweise ist vorgesehen, daß die Anlaufbundbreite zwischen etwa 0,2 und 1, vorzugsweise etwa 0,5, mal dem minimalen Ausrundungsradius der Freistellung beträgt.

Weiters kann vorgesehen sein, daß die Freistellung sich aus zumindest zwei Kreisbögen zusammensetzt, wobei auf der Zapfenseite die Freistellung eine Ausrundung mit kleinerem Radius aufweist als auf der Wangenseite.

Die beschriebenen Maßnahmen haben den Effekt, daß im Bereich der Freistellung bzw. im Bereich der Entlastungskerbe die Spannungslinie einen größeren effektiven Ausrundungsradius aufweist, sodaß lokale Spannungsspitzen abgebaut werden können.

Die Erfindung wird anhand von Zeichnungen näher erläutert. Es zeigen:
- Fig. 1: bis 3 erfindungsgemäß ausgebildete Kurbelwellen,
- Fig. 4: einen Schnitt nach der Linie IV-IV in Fig. 3,
- Fig. 5: ein Detail V aus Fig. 3 im Schnitt,
- Fig. 6: eine weitere Ausbildung der Erfindung im Detailschnitt analog zu Fig. 5.

Funktionsgleiche Teile sind in den Fig. mit gleichen Bezugszeichen versehen. Erfindungswesentliche Details, wie die Freistellung und die Entlastungskerbe, sind in den Fig. zur Verdeutlichung übertrieben groß dargestellt.

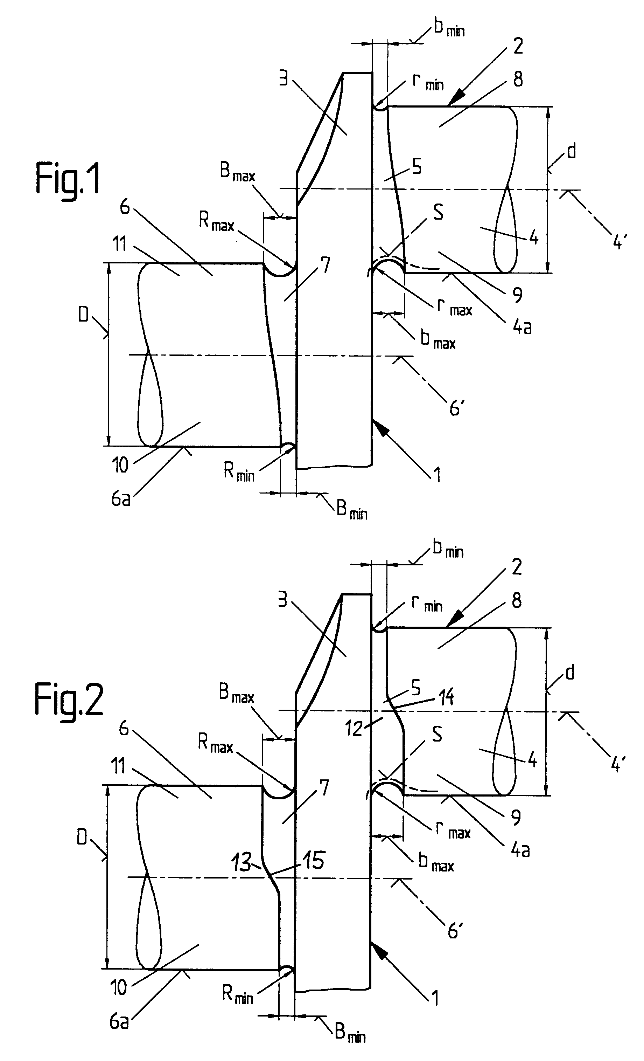

Die Fig. 1 bis 3 zeigen jeweils eine Kurbelwelle 1 mit einer Kröpfung 2, welche einen an eine Kurbelwange 3 anschließenden Kurbelzapfen 4 aufweist. Zwischen Kurbelwange 3 und Kurbelzapfen 4 ist eine nutförmige Freistellung 5 ausgebildet. Mit 4a ist eine Kurbelzapfenlagerfläche des Kurbelzapfens 4 zur Lagerung einer nicht weiter dargestellten Pleuelstange bezeichnet. An der dem Kurbelzapfen 4 gegenüberliegenden Seite der Kurbelwange 3 schließt ein Wellenzapfen 6 mit einer Wellenzapfenlagerfläche 6a zur Lagerung der Kurbelwelle 1 an. Zwischen Kurbelwange 3 und Wellenzapfenlagerfläche 6a ist eine Freistellung 7 ausgebildet. Die Bezugszeichen 4' bzw. 6' bezeichnen die Achse des Kurbelzapfens 4 bzw. des Wellenzapfens 6. Mit d bzw. D ist der Durchmesser des Kurbelzapfens 4 bzw. des Wellenzapfens 6 bezeichnet.

Die auf die Lagerflächen 4a und 6a des Kurbelzapfens 4 und des Wellenzapfens 6 wirkenden Flächenpressungen infolge rotierender und oszillierender Massen sowie der Verbrennungskräfte sind über den Umfang unterschiedlich verteilt. So treten an der äußeren Zapfenhalbseite 8 des Kurbelzapfens 4 größere Flächenpressungen auf als an der inneren Zapfenhalbseite 9. Am Wellenzapfen 6 treten an der dem Kurbelzapfen 4 abgewandten Zapfenhalbseite 10 größere Flächenpressungen an der Wellenzapfenlagerfläche 6a auf als an der dem Kurbelzapfen 4 zugewandten Zapfenhalbseite 11. Bei den Biegespannungen verhält es sich dagegen genau umgekehrt. Die maximalen Biegespannungen treten am Kurbelzapfen 4 im Bereich der inneren Zapfenhalbseite 9 und am Wellenzapfen 6 im Bereich der dem Kurbelzapfen 4 zugewandten Zapfenhalbseite 11 auf. In der in Fig. 1 gezeigten Ausführungsvariante ist vorgesehen, daß der Ausrundungsradius r bzw. R des Kurbelzapfens 4 bzw. des Wellenzapfens 6 seinen kleinsten Wert rₘᵢₙ bzw. Rₘᵢₙ im Bereich der höchsten Belastung der Kurbelzapfenlagerfläche 4a bzw. Wellenzapfenlagerfläche 6a an der Zapfenhalbseite 8 bzw. 10 aufweist. Der größte Radius rₘₐₓ bzw. Rₘₐₓ der Freistellungen 5 bzw. 7 ist dagegen diametral dazu an der Zapfenhalbseite 9 bzw. 11 mit den höchsten Biegespannungen ausgebildet. Über den Zapfenumfang geht der minimale Ausrundungsradius rₘᵢₙ bzw. Rₘᵢₙ kontinuierlich in den maximalen Ausrundungsradius rₘₐₓ bzw. Rₘₐₓ über. Dadurch wird erreicht, daß die strichpunktiert angedeutete Biegespannungslinie S im Übergang zwischen Kurbelzapfen 4 bzw. Wellenzapfen 6 und der Kurbelwellenwange 3 einen größeren effektiven Radius R_{S} aufweist, wodurch lokale Spannungsspitzen vermieden werden können.

Die gleiche Wirkung kann erzielt werden, wenn an den Zapfenhalbseiten 8 bzw. 10 überwiegend ein konstanter minimaler Ausrundungsradius rₘᵢₙ bzw. Rₘᵢₙ und an den gegenüberliegenden Zapfenhalbseiten 9 bzw. 11 des Kurbelzapfens 4 bzw. des Wellenzapfens 6 überwiegend ein konstanter maximaler Radius rₘₐₓ bzw. Rₘₐₓ ausgebildet ist. Um einen unstetigen Übergang zwischen den minimalen Ausrundungsradien rₘᵢₙ, Rₘᵢₙ und den maximalen Ausrundungsradien rₘₐₓ, Rₘₐₓ zu vermeiden, ist in einer biegespannungsarmen Zone 12, 13 ein kontinuierlich verlaufender Übergangsbereich 14, 15 vorgesehen, wie in Fig. 2 gezeigt ist.

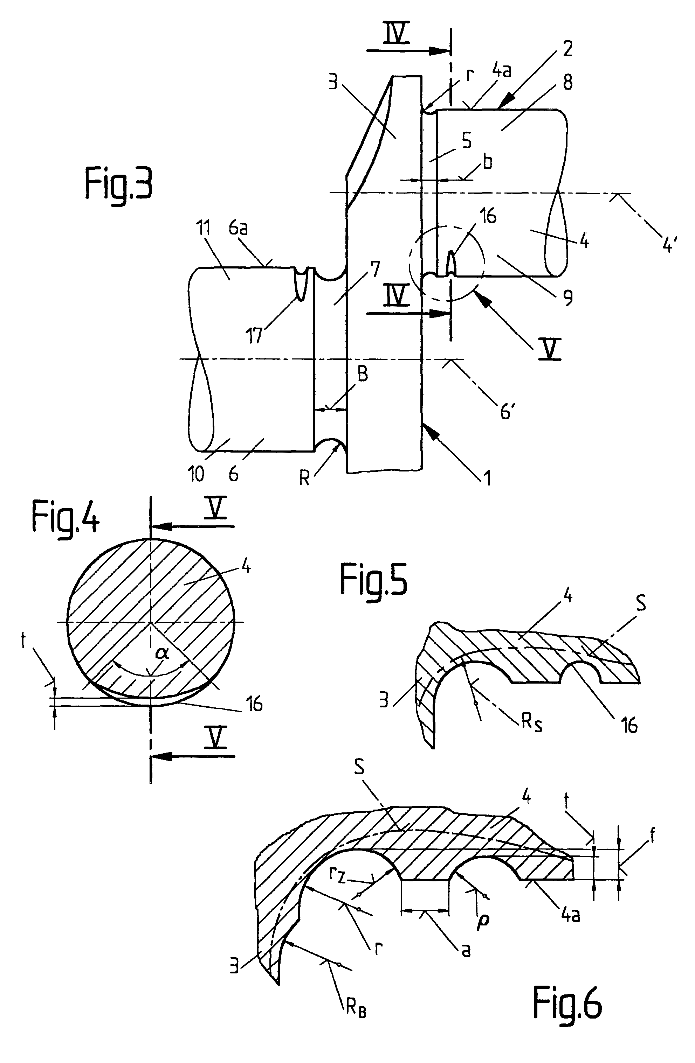

In der in Fig. 3 dargestellten fertigungstechnisch einfacheren Ausführung der Erfindung weisen die Freistellungen 5 und 7 über den Umfang konstante Ausrundungsradien r, R des Kurbelzapfens 4 und des Wellenzapfens 6 auf. In dem der höchsten Lagerbelastung diametral gegenüberliegenden Bereich ist nahe der Freistellung 5 bzw. 7 eine sichelförmige Entlastungskerbe 16 bzw. 17 in einer Entfernung a von 0,5 bis 2,0 mal der Freistellungstiefe f in der Kurbelzapfenlagerfläche 4a bzw. der Wellenzapfenlagerfläche 6a vorgesehen. Die maximale Tiefe t der Entlastungskerbe beträgt zwischen 0,6 und 1,2 der Freistellungstiefe f und spannt sich über einen Winkel α von etwa 45° bis 180°, wie in Fig. 4 ersichtlich ist. Durch diese Maßnahme kann ebenfalls der Spannungsradius R_{S} der Biegespannungslinie im Bereich der Kurbelwange 3 vergrößert werden. Der maximale Kerbradius ρ beträgt etwa 1 bis 3 mal der Freistellungstiefe f.

Eine weitere Möglichkeit der Spannungserniedrigung bietet die Gestaltung des Anlaufbundes, wie in Fig. 6 gezeigt ist. Wird der Übergang der Mantelfläche des Anlaufbundes in die Kurbelwange 3 ebenfalls mit einem Ausrundungsradius R_{B} versehen, so wirkt der durch die Ausrundungsradien r, R_{B} solchermaßen ausgebildete "Doppelradius" der Freistellung 5, 7 zusammen mit der Entlastungskerbe 16, 17 insgesamt auf den Verlauf der Biegespannungslinie S wie ein einziger größerer Ausrundungsradius. Der Ausrundungsradius R_{B} des Anlaufbundes beträgt etwa 0,5 bis 1,5 mal dem Ausrundungsradius r bzw. R der Freistellung 5 bzw. 7. Die Breite des Anlaufbundes beträgt günstigerweise etwa 0,2 bis 1 mal dem Ausrundungsradius r bzw. R.

## Patentansprüche

1. Kurbelwelle (1) für Hubkolbenmaschinen, mit zumindest einer einen Kurbelzapfen (4) mit einer Kurbelzapfenlagerfläche (4a) und zumindest eine Kurbelwange (3) aufweisenden Kröpfung (2), und mindestens einem Wellenzapfen (6) mit einer Wellenzapfenlagerfläche (6a), wobei zwischen an Kurbelwangen (3) grenzenden Zapfenlagerflächen (4a, 6a) und der jeweiligen Kurbelwange (3) eine umlaufende, nutförmige Freistellung (5, 7) mit definierter Breite (b, B) und Tiefe (f) sowie zumindest einem definierten Ausrundungsradius (r, R) ausgebildet ist, **dadurch gekennzeichnet, dass** die Freistellungsbreite (b, B), vorzugsweise auch der Ausrundungsradius (r, R) zumindest einer Zapfenlagerfläche (4a, 6a) im Bereich (9, 11) der niedrigsten Lagerbelastung am Zapfen (4, 6) größer ausgebildet ist als im Bereich (8, 10) der höchsten Lagerbelastung.

2. Kurbelwelle (1) für Hubkolbenmaschinen, mit zumindest einer einen Kurbelzapfen (4) mit einer Kurbelzapfenlagerfläche (4a) und zumindest eine Kurbelwange (3) aufweisenden Kröpfung (2), und mindestens einem Wellenzapfen (6) mit einer Wellenzapfenlagerfläche (6a), wobei zwischen an Kurbelwangen (3) grenzenden Zapfenlagerflächen (4a, 6a) und der jeweiligen Kurbelwange (3) eine umlaufende, nutförmige Freistellung (5, 7) mit definierter Breite (b, B) und Tiefe (f) sowie zumindest einem definierten Ausrundungsradius (r, R) ausgebildet ist, **dadurch gekennzeichnet, dass** die Zapfenlagerfläche (4a, 6a) im Bereich (9, 11) der niedrigsten Lagerbelastung am Zapfen (4, 6) eine sichelförmige Entlastungskerbe (16, 17) unmittelbar neben der Freistellung (5, 7) aufweist.

3. Kurbelwelle (1) nach Anspruch 1, **dadurch gekennzeichnet, dass** die Freistellungsbreite (b,B) und gegebenenfalls der Ausrundungsradius (r, R) vom Bereich (8, 10) der höchsten Lagerbelastung zum Bereich (9, 11) der niedrigsten Lagerbelastung kontinuierlich zunimmt.

4. Kurbelwelle (1) nach Anspruch 1, **dadurch gekennzeichnet, dass** die Freistellung (5, 7) an der die höchste Lagerbelastung aufweisenden Zapfenhalbseite (8, 10) überwiegend eine konstante, minimale Breite und (bₘᵢₙ, Bₘᵢₙ) und gegebenenfalls einen konstanten minimalen Ausrundungsradius (rₘᵢₙ, Rmin) und an der die minimale Lagerbelastung aufweisenden gegenüberliegenden Zapfenhalbseite (9, 11) überwiegend eine konstante maximale Breite (bₘₐₓ, Bₘₐₓ) und gegebenenfalls einen konstanten maximalen Ausrundungsradius (rₘₐₓ, Rₘₐₓ) aufweist, wobei der Übergang (14, 15) von der minimalen (bₘᵢₙ, Bₘᵢₙ) zur maximalen Breite (bₘₐₓ, Bₘₐₓ) bzw. von minimalen (rₘᵢₙ, Rₘᵢₙ) zum maximalen Ausrundungsradius (rₘₐₓ, Rₘₐₓ) in einem biegespannungsarmen Bereich (12, 13) der Kurbelwelle (1) liegt.

5. Kurbelwelle (1) nach Anspruch 4, **dadurch gekennzeichnet, dass** im Übergangsbereich (14, 15) von der minimalen (bₘᵢₙ, Bₘᵢₙ) zur maximalen Breite (bₘₐₓ, Bₘₐₓ) bzw. vom minimalen (rₘᵢₙ, Rₘᵢₙ) zum maximalen Ausrundungsradius (rₘₐₓ, Rₘₐₓ) die Breite (b,B) bzw. der Ausrundungsradius (r, R) kontinuierlich zunimmt.

6. Kurbelwelle (1) nach Anspruch 1, **dadurch gekennzeichnet, dass** die Freistellung (5, 7) durch spanabhebende Bearbeitung hergestellt wird.

7. Kurbelwelle (1) nach Anspruch 1, **dadurch gekennzeichnet, dass** die Freistellung (5, 7) in einem Umformvorgang hergestellt ist.

8. Kurbelwelle (1) nach einem der Ansprüche 1 oder 3 bis 7, **dadurch gekennzeichnet, dass** der maximale Ausrundungsradius (rₘₐₓ, Rₘₐₓ) mindestens etwa 1,5 bis 3, vorzugsweise etwa 2, mal dem minimalen Ausrundungsradius (rₘᵢₙ, Rₘᵢₙ) beträgt.

9. Kurbelwelle (1) nach einem der Ansprüche 1 oder 3 bis 8, **dadurch gekennzeichnet, dass** die maximale Breite (bₘₐₓ, Bₘₐₓ) mindestens etwa 1,5 bis 3, vorzugsweise etwa 2, mal der minimalen Breite (bₘᵢₙ, Bₘᵢₙ) beträgt.

10. Kurbelwelle (1) nach Anspruch 2, **dadurch gekennzeichnet, dass** die Entlastungskerbe (16, 17) etwa eine Tiefe (t) zwischen 0,6 und 1,2, vorzugsweise 0,8 mal der Freistellungstiefe (f) beträgt.

11. Kurbelwelle (1) nach Anspruch 2 oder 10, **dadurch gekennzeichnet, dass** die Entlastungskerbe (16, 17) sich etwa über einen Zapfenwinkel (α) von 45° bis 180°, vorzugsweise zwischen 60° und 120°, beidseits des Bereiches (9, 11) der niedrigsten Lagerbelastung am Zapfen (4, 6) erstreckt.

12. Kurbelwelle (1) nach einem der Ansprüche 2, 10 oder 11, **dadurch gekennzeichnet, dass** der Abstand (a) zwischen Freistellung (5, 7) und Entlastungskerbe (16, 17) zwischen etwa 0,5 und 2, vorzugsweise etwa 0,8 bis 1,2 mal der Freistellungstiefe (f) beträgt.

13. Kurbelwelle (1) nach einem der Ansprüche 2 oder 3 bis 12, **dadurch gekennzeichnet, dass** der maximale Ausrundungsradius (ρ) der Entlastungskerbe (16, 17) zwischen etwa 1 und 3, vorzugsweise etwa 1,5 bis 2,5, mal der Freistellungstiefe (f) beträgt.

14. Kurbelwelle (1) nach einem der Ansprüche 1 bis 13, **dadurch gekennzeichnet, dass** zwischen Kurbelwange (3) und zumindest einer Freistellung (5, 7) des Zapfens (4, 6) in an sich bekannter Weise ein Anlaufbund vorgesehen ist, dessen Durchmesser größer ist als der Zapfendurchmesser (d, D), wobei der Anlaufbund einen zur Kurbelwange (3) auslaufenden Ausrundungsradius (R_{B}) aufweist, der vorzugsweise etwa 0,5 bis 1,5, vorzugsweise 1,0 mal dem minimalen Ausrundungsradius (r, R; rₘᵢₙ, Rₘᵢₙ) der Freistellung (5, 7) beträgt.

15. Kurbelwelle (1) nach Anspruch 14, **dadurch gekennzeichnet, dass** die Anlaufbundbreite zwischen etwa 0,2 und 1, vorzugsweise etwa 0,5, mal dem minimalen Ausrundungsradius (r, R; rₘᵢₙ, Rₘᵢₙ) der Freistellung (5, 7) beträgt.

16. Kurbelwelle (1) nach einem der Ansprüche 2 oder 9 bis 15, **dadurch gekennzeichnet, dass** die Freistellung (5, 7) sich aus zumindest zwei Kreisbögen zusammensetzt, wobei auf der Zapfenseite die Freistellung (5, 7) eine Ausrundung mit kleinerem Radius (r_{z}, R_{z}) aufweist als auf der Wangenseite.

## Claims

1. Crankshaft (1) for reciprocating engines, comprising at least one crank (2) including a crankpin (4) with a crank pin bearing surface (4a) and at least one crank web (3), and further comprising at least one crankshaft journal (6) with a crankshaft journal bearing surface (6a), a peripheral groove-shaped recess (5, 7) being provided between bearing surfaces (4a, 6a) adjoining crank webs (3), and the corresponding web (3), said recess (5, 7) having a defined width (b, B) and depth (f) and at least one defined radius (r, R), **characterized in that** the recess width (b, B), and preferably also the radius (r, R) of at least one bearing surface (4a, 6a) is larger in the region (9, 11) of lowest bearing load at the pin (4) or journal (6) than in the region (8, 10) of highest bearing load.

2. Crankshaft (1) for reciprocating engines, comprising at least one crank (2) including a crankpin (4) with a crank pin bearing surface (4a) and at least one crank web (3), and further comprising at least one crankshaft journal (6) with a crankshaft journal bearing surface (6a), a peripheral groove-shaped recess (5, 7) being provided between bearing surfaces (4a, 6a) adjoining crank webs (3), and the corresponding web (3), said recess (5, 7) having a defined width (b, B) and depth (f) and at least one defined radius (r, R), **characterized in that** the bearing surface (4a, 6a) features a crescent-shaped pressure relief notch (16, 17) in the immediate vicinity of the recess (5, 7) in the region (9, 11) of lowest bearing load at the pin (4) or journal (6).

3. Crankshaft (1) according to claim 1, **characterized in that** the recess width (b, B) and, if applicable, the radius (r, R) increases continuously from the region (8, 10) of highest bearing load to the region (9, 11) of lowest bearing load.

4. Crankshaft (1) according to claim 1, **characterized in that** the recess (5, 7) features a predominantly constant minimum width (bₘᵢₙ, Bₘᵢₙ) and, if applicable, a constant minimum radius (rₘᵢₙ, Rₘᵢₙ) in the region (8, 10) subject to highest bearing load, and a predominantly constant maximum width (bₘₐₓ, Bₘₐₓ) and, if applicable, a constant maximum radius (rₘₐₓ, Rₘₐₓ) in the opposed region (9, 11) subject to lowest bearing load, the region of transition (14, 15) from minimum (bₘᵢₙ, Bₘᵢₙ) to maximum width (bₘₐₓ, Bₘₐₓ), or rather, from minimum (rₘᵢₙ, Rₘᵢₙ) to maximum radius (rₘₐₓ, Rₘₐₓ) lying in a region (12, 13) of low bending stress of the crankshaft (1).

5. Crankshaft (1) according to claim 4, **characterized in that** in the region of transition (14, 15) from minimum (bₘᵢₙ, Bₘᵢₙ) to maximum width (bₘₐₓ, Bₘₐₓ), or rather, from minimum (rₘᵢₙ, Rₘᵢₙ) to maximum radius(rₘₐₓ, Rₘₐₓ), the width (b, B) and/or radius (r, R) increases continuously.

6. Crankshaft (1) according to claim 1, **characterized in that** the recess (5, 7) is produced by machining.

7. Crankshaft (1) according to claim 1, **characterized in that** the recess (5, 7) is produced by a transformation technique.

8. Crankshaft (1) according to claim 1 or any of claims 3 to 7, **characterized in that** the maximum radius (rₘₐₓ, Rₘₐₓ) is at least 1.5 to 3 times, and preferably twice, the minimum radius (rₘᵢₙ, Rₘᵢₙ).

9. Crankshaft (1) according to claim 1 or any of claims 3 to 8, **characterized in that** the maximum width (bₘₐₓ, Bₘₐₓ) is at least 1.5 to 3 times, and preferably twice, the minimum width (bₘᵢₙ, Bₘᵢₙ).

10. Crankshaft (1) according to claim 2, **characterized in that** the pressure relief notch (16, 17) has a depth t of between 0.6 and 1.2 times, and preferably 0.8 times, the recess depth (f).

11. Crankshaft (1) according to claim 2 or 10, **characterized in that** the pressure relief notch (16, 17) extends over a pin angle (α) of 45° to 180°, and preferably of 60° to 120°, on either side of the region (9, 11) of lowest bearing load at the pin (4) or journal (6).

12. Crankshaft (1) according to any of claims 2, 10 or 11, **characterized in that** the distance a between recess (5, 7) and pressure relief notch (16, 17) is about 0.5 to 2 times, and preferably 0.8 to 1.2 times, the recess depth (f).

13. Crankshaft (1) according to any of claims 2 or 3 to 12, **characterized in that** the maximum radius (ρ) of the pressure relief notch (16, 17) is about 1 to 3 times, and preferably 1.5 to 2.5 times, the recess depth (f).

14. Crankshaft (1) according to any of claims 1 to 13, **characterized in that** between the crank web (3) and at least one recess (5, 7) of the pin (4) or journal (6) an abutment collar is provided in a manner well-known in the art, whose diameter exceeds the pin diameter (d) or journal diameter (D), said collar featuring a radius (R_{B}) ending at the crank web (3), which radius (R_{B}) is about 0.5 to 1.5 times, and preferably 1.0 times, the minimum radius (r, R; rₘᵢₙ, Rₘᵢₙ) of the recess (5, 7).

15. Crankshaft (1) according to claim 14, **characterized in that** the collar width amounts to about 0.2 to 1 times, and preferably 0.5 times, the minimum radius (r, R; rₘᵢₙ, Rₘᵢₙ) of the recess (5, 7).

16. Crankshaft (1) according to any of claims 2 or 9 to 15, **characterized in that** the recess (5, 7) is composed of at least two circular arcs, the recess (5, 7) on the pin or journal side having a smaller radius (r_{z}, R_{z}) than on the web side.

## Revendications

1. Vilebrequin (1) de moteur à pistons linéaires comprenant au moins une partie coudée (2) munie d'un maneton de vilebrequin (4) avec une surface (4a) de palier de maneton et au moins un flasque (3), et d'au moins un tourillon (6) avec une surface de palier de tourillon (6a), et, entre les surfaces de palier (4a, 6a) adjacentes au flasque (3) et le flasque (3) respectif, on a un dégagement périphérique (5, 7), en forme de rainure de largeur définie (b, B), de profondeur (f) et avec au moins un rayon de congé (r, R) déterminé,
**caractérisé en ce que**
la largeur de dégagement (b, B), de préférence également le rayon (r, R) du congé d'au moins une surface de palier (4a, 6a) dans la zone (9, 11) de la sollicitation de palier la plus faible sur l'élément (4, 6) est plus grande que dans la zone (8, 10) de la sollicitation la plus élevée du palier.

2. Vilebrequin (1) de moteur à pistons linéaires comportant au moins une partie coudée (2) munie d'un maneton (4) de vilebrequin avec une surface de palier de maneton (4a) et au moins un flasque (3), et au moins un tourillon (6) avec une surface de palier de tourillon (6a), et entre les surfaces de palier (4a, 6a) adjacentes aux flasques (3) et le flasque (3) respectif, on a un dégagement (5, 7), périphérique en forme de rainure avec une largeur (b, B) définie ainsi qu'une profondeur (f) et au moins un rayon de congé (r, R) déterminé,
**caractérisé en ce que**
la surface de palier (4a, 6a) dans la zone (9, 11) de la sollicitation la plus faible du palier sur le maneton/tourillon (4, 6) présente une encoche de dégagement (16, 17) en forme de croissant directement à côté du dégagement (5, 7).

3. Vilebrequin (1) selon la revendication 1,
**caractérisé en ce que**
la largeur de dégagement (b, B) et le cas échéant le rayon de congé (r, R) de la zone (8, 10) de la sollicitation la plus élevée du palier diminue en continu vers la zone (9, 11) correspondant à la sollicitation la plus faible du palier.

4. Vilebrequin selon la revendication 1,
**caractérisé en ce que**
le dégagement (5, 7) du demi-côté de maneton tourillon (8, 10) correspondant à la sollicitation de palier la plus élevée, présente une largeur minimale constante (bₘᵢₙ, Bₘᵢₙ) est le cas échéant un rayon de congé minimum constant (rₘᵢₙ, Rₘᵢₙ) et sur le côté du demi-maneton/tourillon (9, 11), opposé, présentant la sollicitation de palier minimale, on a principalement une largeur maximale constante (bₘₐₓ, Bₘₐₓ) et le cas échéant un rayon de congé maximum constant (rₘₐₓ, Rₘₐₓ), et la transition (14, 15) entre la largeur minimale (bₘᵢₙ, Bₘᵢₙ) vers la largeur maximale (bₘₐₓ, Bₘₐₓ), entre le rayon de congé minimum (rₘᵢₙ, Rₘᵢₙ) vers le rayon de congé maximum (rₘₐₓ, Rₘₐₓ), se situe dans une plage du vilebrequin (1) à faibles contraintes de flexion (12, 13).

5. Vilebrequin (1) selon la revendication 4,
**caractérisé en ce que**
dans la zone transitoire (14, 15), entre la largeur minimale (bₘᵢₙ, Bₘᵢₙ) vers la largeur maximale (bₘₐₓ, Bₘₐₓ), en passant du rayon de congé minimum (rₘᵢₙ, Rₘᵢₙ) vers le rayon de congé maximum (rₘₐₓ, Rₘₐₓ), la largeur (b, B) ou le rayon de congé (r, R) augmente en continu.

6. Vilebrequin (1) selon la revendication 1,
**caractérisé en ce qu'**
on réalise le dégagement (5, 7) par un usinage avec enlèvement de copeaux.

7. Vilebrequin (1) selon la revendication 1,
**caractérisé en ce qu'**
on réalise le dégagement (5, 7) par une opération de transformation.

8. Vilebrequin (1) selon l'une quelconque des revendications 1 ou 3 à 7,
**caractérisé en ce que**
le rayon de congé maximum (rₘₐₓ, Rₘₐₓ) représente au moins environ 1,5 jusqu'à 3 et de préférence environ 2 fois le rayon de congé minimum (rₘᵢₙ, Rₘᵢₙ).

9. Vilebrequin (1) selon l'une quelconque des revendications 1 ou 3 à 8,
**caractérisé en ce que**
la largeur maximale (bₘₐₓ, Bₘₐₓ) représente au moins environ 1,5 jusqu'à 3 et de préférence environ 2 fois la largeur minimale (bₘᵢₙ, Bₘᵢₙ).

10. Vilebrequin (1) selon la revendication 2,
**caractérisé en ce que**
l'encoche de décharge (16, 17) a une profondeur (t) comprise sensiblement entre 0,6 et 1,2 et de préférence 0,8 fois la profondeur de dégagement (f).

11. Vilebrequin (1) selon l'une quelconque des revendications 2 ou 10,
**caractérisé en ce que**
l'encoche de décharge (16, 17) occupe sensiblement un angle de tourillon/vilebrequin (α) allant de 45° à 180° et de préférence compris entre 60 et 120° de part et d'autre de la zone (9, 11) de la sollicitation de palier la plus faible du maneton/tourillon (4, 6).

12. Vilebrequin (1) selon l'une quelconque des revendications 2, 10 ou 11,
**caractérisé en ce que**
la distance (a) entre le dégagement (5, 7) et l'encoche de décharge (16, 17) est comprise entre 0,5 et 2 et de préférence entre environ 0,8 et 1,2 fois la profondeur de dégagement (f).

13. Vilebrequin (1) selon l'une quelconque des revendications 2 ou 3 à 12,
**caractérisé en ce que**
le rayon de courbure maximum (ρ) de l'encoche de décharge (16, 17) est compris entre environ 1 et 3 et de préférence entre environ 1,5 et 2,5 fois la profondeur de dégagement (f).

14. Vilebrequin (1) selon l'une quelconque des revendications 1 à 13,
**caractérisé en ce qu'**
entre les flasques (3) et au moins un dégagement (5, 7) du maneton/tourillon (4, 6) il est prévu une collerette d'attaque, de préférence connue en soi dont le diamètre est supérieur au diamètre de maneton/tourillon (d, D), et la collerette d'attaque présente un rayon de congé (R_{B}) qui se termine sur le flasque (3), et ce rayon est de préférence compris entre environ 0,5 et 1,5 et de préférence égal à 1,0 fois le rayon de congé minimum (r, R ; rₘᵢₙ, Rₘᵢₙ) du dégagement (5, 7).

15. Vilebrequin (1) selon la revendication 14,
**caractérisé en ce que**
la largeur d'attaque est comprise entre environ 0,2 et 1 et elle est de préférence d'environ 0,5 fois le rayon de congé minimum (r, R ; rₘᵢₙ, Rₘᵢₙ) du dégagement (5, 7).

16. Vilebrequin (1) selon l'une quelconque des revendications 2 ou 9 à 15,
**caractérisé en ce que**
le dégagement (5, 7) se compose d'au moins deux arcs de cercle, le dégagement (5, 7) ayant un arrondi de rayon plus faible (r_{z}, R_{z}) du côté du tourillon que du côté du flasque.
